# EUROPEAN PATENT SPECIFICATION

(11) **EP 1 407 339 B1**
(45) Date of publication and mention of the grant of the patent: **03.05.2006**
(21) Application number: 02743411.7
(22) Date of filing: 04.07.2002
(51) Int. Cl.: G06F 1/00

(54) **FIRMWARE VALIDATION**
GÜLTIGKEITSPRÜFUNG VON FIRMWARE
VALIDATION DE MICROPROGRAMME

(30) Priority: 06.07.2001 GB 0116568
(43) Date of publication of application: 14.04.2004
(73) Proprietor: Ncipher Corporation Limited, Cambridge, Cambridgeshire CB1 2JD (GB)
(72) Inventor: VAN SOMEREN, Nicholas, Benedict, Cambridge CB1 2N (GB); HARVEY, Ian, Nigel, Cambridge CB5 8TE (GB)
(74) Representative: Maggs, Michael Norman
(86) International application number: PCT/GB2002/003058
(87) International publication number: WO 2003/005172

(56) References cited:
- EP-A- 0 849 657
- WO-A-00/33196
- WO-A-00/48063
- WO-A-98/36517
- US-A- 5 836 013
- P VAN LEEUWEN ET AL: "Bios Questions" INTERNET GOOGLE, [Online] 7 May 1997 (1997-05-07), XP002260024 Retrieved from the Internet: <URL:http://groups.google.com/groups?q=com pressed+bios+algorithm&hl=en&lr=&ie=UTF-8& oe=UTF-8&selm=6dusie%24fo0%2410%40winter.n ews.erols.com&rnum=7> [retrieved on 2003-11-03]

## Description

The present invention relates to firmware validation, and in particular although not exclusively to the validation of firmware within secure embedded computer systems.

A great many systems rely nowadays on embedded computer systems for their functionality, and those embedded systems in turn rely on their firmware (built in software) for their correct operation. In the vast majority of cases, the user simply operates the system with the firmware originally supplied by the manufacturer, upgrading later as necessary if any change to the functionality is required. The firmware version number, as reported by the firmware itself, is all that the user normally needs to know.

Such an approach is inadequate in the context of secure or sensitive systems such as for example Automated Teller Machines for banks, or Computer Security Modules for storing encryption keys. These and other secure applications needs to be resistant to the attentions of malicious attackers who might attempt to alter or replace the firmware code so that it carries out some modified function, thus breaching the security of the system.

One way in which the validity of the firmware can be checked is to read it out of the system and to compare it, byte by byte, with a reference copy that is known to be correct. While such an approach is effective, it may not be attractive to the supplier or manufacturer of the system, since it requires the entire contents of the firmware to be extracted from the secure embedded environment. Once extracted, the information passes out of the control of the manufacturer, and might easily fall into the hands of an attacker. Furthermore, the firmware itself may represent valuable intellectual property, and the manufacturer may well not want that disclosed to anybody at all, even to the purchaser or user of the embedded system.

In an effort to keep the firmware confidential, it has been proposed to add a function to the firmware which will cause it, on request, to compute a checksum (or fingerprint) on the whole of the firmware and return this to the user. Since only the fingerprint is divulged, the firmware and the intellectual property it represents can remain safely contained within the embedded system. The user checks the fingerprint against the known correct value, usually supplied by the manufacturer, and concludes that the firmware is valid if the two values are the same. This method works well against accidental corruption of the firmware, but does not prevent a malicious attacker altering the firmware and, at the same time, changing the fingerprint function so that the "correct" or expected value is always returned.

One approach to dealing with this problem is disclosed in WO-A-0018162. However, while the system disclosed in WO-A-0018162 may protect the user from a wide range of attacks, it could in principle be subverted were the attacker to be extremely technically adept. If the attacker could use data compression techniques to compress the original embedded software, it would then in principle at least be possible to keep both the compressed correct software and the attacker's modified software in memory. The usual operation of the system could then be replaced by the attacker's bogus operation, but when faced with a challenge, it could decompress the original software and compute the correct authentication code to return on the basis of that correct software. This document discloses those features set out in the pre-characterising portions of the independent claims.

WO-A-9836517 discloses a system which uses a co-processor to carry out internal validity checks.

The invention is characterised by those features set out in the characterising portions of the independent claims.

The authentication means may comprise either a hardware authentication module, incorporated within the system, or alternatively a software function. Where the authentication means comprises a software function, that function may be stored in a common memory (for example a read only memory) with the firmware to be validated. In the present context, "read only memory" includes flash and other persistent memory technologies (which could be overwritten by an attacker) as well as memory modules and other replaceable memory technologies (which could simply be replaced with an illegitimate version).

The second external challenge forming the first input to the authentication means may be remotely provided by a user of the system, and preferably takes the form of a random number chosen from within a wide range. This makes it impossible or at least unfeasible for an attacker to replicate the functionality of the authentication means by simply storing all possible responses to all possible challenges.

The second input to the authentication means is representative of the firmware to be validated. It is preferred that the input comprises the entirety of the firmware itself, although it would be possible for just a part of the firmware to be used, or alternatively the output of some function which is representative of the firmware. Also, it is envisaged that the second input may include additional data, other than the firmware itself, for example the entirety of the information stored in the memory (e.g. the ROM) which holds the firmware. In one embodiment, the memory holds a compressed copy of the firmware, plus an uncompression program, with random data filling the rest of the memory; in another embodiment the memory contains an encrypted copy of the firmware, a decryption program, and again random data filling the rest of the memory. In both of those embodiments, preferably the entirety of the stored information, including the random data, is used as the second input to the authentication means.

The computer system is preferably an embedded system, and may also or alternatively be a secure system which includes means for preventing or resisting extraction or copying of the firmware. In one specific embodiment, a computer system comprises a computer security module for the storage of secure data, for example for the management and storage of cryptographic keys.

Where equivalent challenges are issued to the computer system and to the trusted system, those challenges may, but need not, be absolutely identical. It might be desirable for the challenges to be different, but essentially mathematically equivalent, if for example there were a need for one challenge to be encrypted to a first key and the other to be encrypted to a second key. The operative result is of course what is important, and not whether the two challenges are absolutely identical.

Likewise, dependent upon the algorithms used, it is preferable but by no means essential for the authentication code to be identical with the check authentication code when the firmware is to be confirmed as valid. Once again, it is the operative result that is important: namely, has the remote trusted system confirmed that the response given by the computer system is the correct one?

In one embodiment, equivalent challenges are not issued. Instead, a code representative of the authentication code is sent as a challenge to the remote or local trusted system, and the firmware is determined to be valid or otherwise in dependence upon the resultant check authentication code. In such a system, it is preferred that the challenge code is actually the authentication code itself, although it could be the authentication code which has been modified in some way or which has been passed through some mathematical function. In this arrangement, the check authentication code may simply comprise a Yes/No or Valid/Invalid response which is returned from the trusted system back to the user.

A user wishing to check the validity of the firmware may communicate with the computer system and/or with the trusted system across a local or wide area wired or wireless network, or across the Internet. Communication may be via one or more secure channels and/or via encrypted and preferably signed messages across one or more insecure channels.

Alternatively, the trusted system may be local to the user, and indeed in a preferred embodiment comprises a computer algorithm which is executed locally by the user. The algorithm itself may have been supplied to the user by the trusted third party via some secure channel such as by encrypted e-mail or on physical media.

The user who wishes to validate the firmware could be anybody, but will typically be a purchaser or user of the computer system, or its owner. Where a manufacturer, for example of security systems, has sent out a module to be manufactured by a third party under a sub-contract, the user may be the original manufacturer who may wish to check the integrity of the module that has been manufactured on his behalf. In those circumstances, the original manufacturer may effectively be both the user and the agent controlling the trusted system.

Generally, the trusted system may be under the control of an agent, the manufacturer, or some other trusted third party or independent organisation. As described above, the person or organisation which actually runs the algorithm contained within the trusted system may, but need not be, the agent, manufacturer, trusted third party or independent organisation itself. The algorithms making up the trusted system may actually be operated, locally, by the user, allowing the user to check for himself the validity of a security module without needing to refer, every time, to an outside organisation.

According to a further aspect of the invention, there is provided a method of validating firmware within a computer system, the method comprising:
(a) issuing equivalent challenges to the computer system and to a trusted system; .
(b) at the computer system, comprising an authentication code in dependence upon:
   (i) a first input comprising the challenge, and
   (ii) a second input representative of the firmware to be validated;
(c) at the trusted system, computing a check authentication code;
(d) determining the validity of the firmware by comparing the authentication code and the check authentication code;
the method being characterised in that the firmware is held in persistent memory in compressed form, along with an uncompression routine and additional substantially incompressible data to fill the memory.

According to a further aspect, there is provided a method of validating firmware within a computer system, the method comprising:
(a) issuing a challenge to the computer system;
(b) at the computer system, comprising an authentication code in dependence upon:
   (i) a first input comprising the challenge, and
   (ii) a second input representative of the firmware to be validated;
(c) supplying a challenge code representative of the authentication code as a challenge to a trusted system;
(d) at the trusted system, computing a check authentication code in dependence upon the said challenge code; and
(e) determining the validity of the firmware in accordance with the check authentication code;
and in which the firmware is held in persistent memory in compressed form, along with an uncompression routine and additional substantially incompressible data to fill the memory.

According to yet a further aspect, there is provided a computer system containing firmware to be validated, the system including authentication means arranged to return an authentication code in dependence upon:
(i) a first input comprising an external challenge, and
(ii) a second input representative of the firmware;
the system being characterised in that the firmware is held in persistent memory in compressed form, along with an uncompression routine and additional substantially incompressible data to fill the memory.

The present invention, in its various embodiments, allows a user to be absolutely certain that the firmware within a system has not been changed or subverted without his knowledge, even in respect of secure systems which prevent the user from having any access to the firmware itself.

The invention may be carried into practice in a number of ways and several specific embodiments will now be described, by way of example, with reference to the accompanying drawings, in which:
Figure 1 is a schematic view of a firmware validation system according to an embodiment of the invention;
Figures 2 and 3 show alternative message flows; and
Figure 4 shows an embodiment in which the trusted system is a software algorithm run by the user.

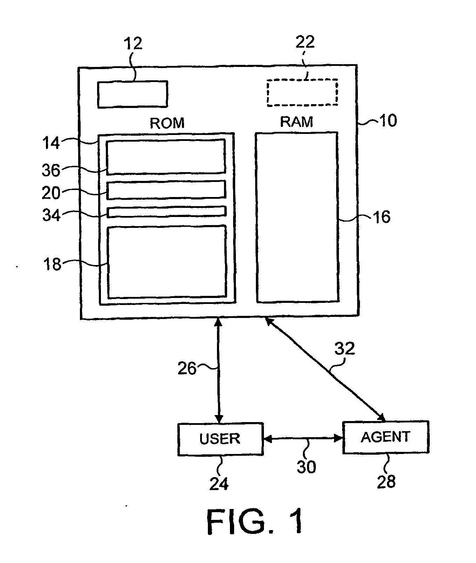

Turning first to Figure 1, there is shown a computer system 10 containing the usual processor 12, ROM 14 and RAM 16. The ROM 14 contains firmware 18 to be validated. It will be understood that the ROM could be replaced with any other type of persistent memory technology. A computer system 10 is preferably although not necessarily a secure embedded system or secure module which prevents the software 18 from being extracted, copied or otherwise interfered with. The computer system 10 forms an embodiment of the invention in its own right.

The computer system 10 contains a firmware validation mechanism which may take the form either of a software authentication function 20 or, alternatively, a hardware authentication module 22. In either case, the system makes us of an Message Authentication Code algorithm to return an authentication code in dependence upon:
1. A first input, comprising an external challenge from a user 24, and
2. A second input representative of the firmware 18.

The function 20 or the module 22 may make use of any standard Message Authentication Code (MAC) functionality such as HMAC (Hash MAC) or CBCMAC (Cypher Block Chaining MAC). Any other appropriate algorithm could be used having the following properties:
• The output is deterministic for any given set of inputs, knowledge of the inputs allowing the output to be created in a straightforward fashion.
• Knowledge of the output alone does not reveal any useful information about the inputs.
• Knowledge of the difference between two inputs, or otherwise incomplete knowledge of the inputs, does not provide enough information to determine the difference in the resultant outputs, even if one of the outputs is known.

In order to verify the calculations carried out by the system, the user will refer to a trusted third party or agent 28 who is assumed to have definitive knowledge of the firmware 18 that should be contained within the ROM 14. The agent might be the system manufacturer, an agent of the manufacturer, some trusted independent computing device, or some other trusted third party.

The user 24, wishing to check the validity of the firmware 18, first picks a random challenge number in some large, predefined range and passes that challenge on to the system 10 via some channel 26. The function 20 or the module 22 computes the Message Authentication Code using both the challenge value and the full contents of the firmware 18 within the system, and sends back an authentication code to the user. The user then presents the same (or an equivalent) challenge to the trusted third party or agent 28, via some other channel 30. The agent then computes the same message authentication code using the same challenge, and returns the correct response. The agent may conveniently do this by using an identical algorithm to that used by the computer system 10, ensuring that one of the inputs represents the expected firmware that is meant to be contained within the ROM 14. The user 24 compares the responses, and accepts the firmware 18 as being valid if the two responses are the same.

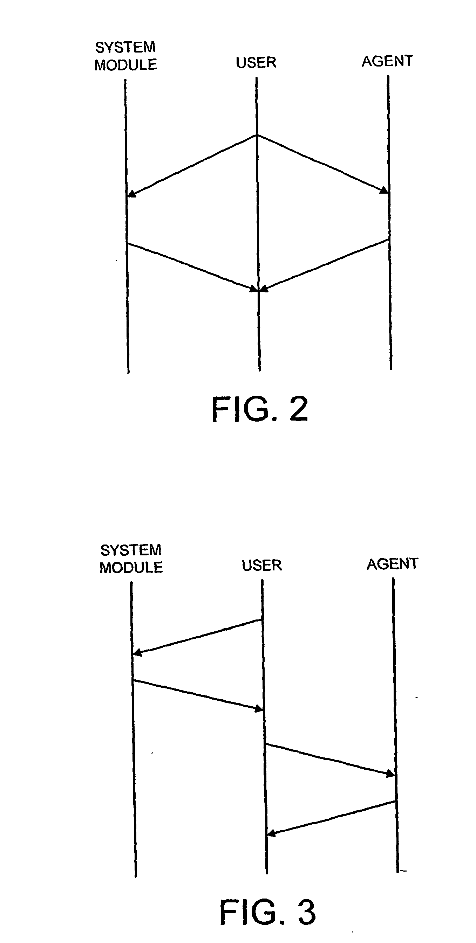

The message flows are illustrated in Figure 2. The user presents a challenge to the module and an equivalent (for example an identical) challenge to the agent. Both the module and the agent send back responses, which the user then tests for equivalence.

In a variant of the invention, the user could instead present both the challenge and the response to the agent 28, who would then return a simple Yes/No answer as to the validity of the firmware.

In yet another alternative, it may not be necessary for the user to submit the original challenge to the agent, at all. If the authentication code returned by the system 10 contains enough information on its own for the agent to determine the validity or otherwise of the firmware, a separate copy of the challenge itself may be unnecessary. To take an extremely trivial example, if the authentication code returned by the system 10 were to include, within it, an encrypted version of the original challenge, that code would be the only thing needed by the agent (using appropriate decryption software) to allow it to confirm back to the user whether or not the firmware was valid.

The message flows for this arrangement are illustrated in Figure 3. The user presents a challenge to the module, and obtains its response. The user then presents a challenge to the agent based upon this response (and possibly also based upon the original challenge). The agent then returns a Pass/Fail result to the user.

Because of the large number of possible challenges available to the user, it would not be feasible for an attacker to replicate the MAC functionality by means of a lookup table or any other function that did not actually require the presence of the correct version of the firmware.

In a typical implementation, the system 10 may be physically remote from the user 24, which is itself physically remote from the agent 28. The communication channels 26,30 may include any convenient communication channels such as a wired or wireless network, the Internet, or point to point connections. Preferably, the channels are secure, but alternatively communication may be carried out by means of encrypted and signed messages. By these means, the user can be confident that the authentication code is coming back from the required computer system 10 to be checked, and that the check authentication code is coming back from the true, trusted agent 28.

A further similar channel 32 may be provided between the agent 28 and the system 10 allowing the agent to check the firmware directly.

In order to prevent the type of attack discussed above in relation to WO-A-0018162, the firmware 18 within the ROM 14 is stored in compressed form, along with a small uncompression program 34. Any remaining part of the ROM is completely filled with random or otherwise substantially incompressible data 36.

Before any part of the firmware is executed, the uncompression program 34 expands that firmware from the ROM 14 into the RAM 16, and the code is executed from there. When a challenge is presented, the Message Authentication Code is computed not on the basis of the firmware alone, but on the entirety of the data (including the random data) contained within the ROM 14. The agent 28 of course computes its code using the correct, known, entirety of the contents of the ROM 14.

As is well known, it is very hard to compress data that has already been compressed, and it is also essentially impossible to compress random information. So long as the uncompression code 34 is small and tightly written, it will be very hard indeed for an attacker to compress the contents of the ROM 14 enough to make room for any alternative version of the code to be inserted, while still keeping a copy of the original. Thus, it will not be possible for the bogus ROM both to alter the function of the firmware and still to return a valid response to any possible challenge.

As an alternative or in addition to compression, the firmware could be encrypted, with the uncompression program 34 being replaced with an appropriate decryption program. Such an approach may, however be less secure since either the decryption key itself has to be stored on the ROM, or the system 100 has to have some other way of getting hold of the decryption key whenever it needs to execute the firmware.

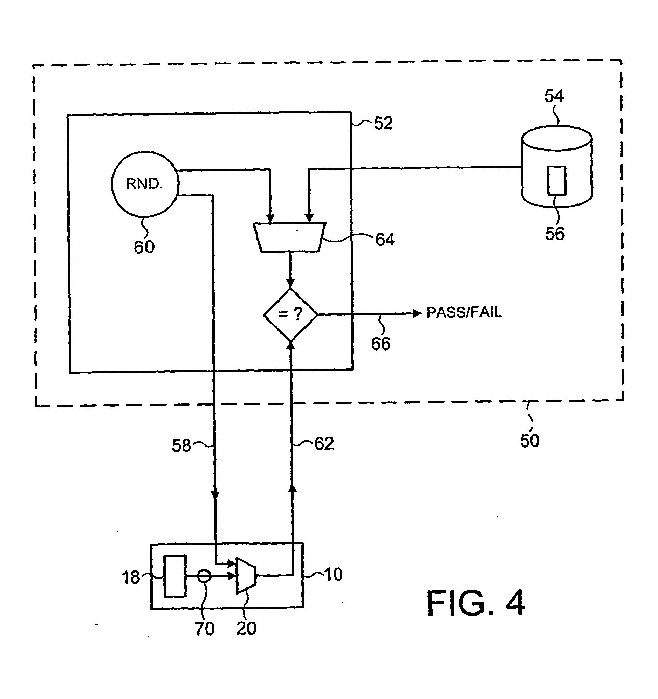

In the embodiment so far described, the agent 28 controls and operates the trusted system (the validation algorithm) to which the user 24 refers. However, it is not essential for the agent/manufacturer/trusted third party/independent organisation actually to run the validation routine, provided that it maintains control of the way that the validation routine operates. In one convenient embodiment, illustrated schematically in Figure 4, the agent provides a validation routine for the user to run himself whenever he wishes to validate the firmware. A validation routine 52 along with a firmware file 54 containing a copy 56 of the "correct" firmware (i.e. the expected contents of the ROM 14) is supplied on a CD ROM or other physical media, as indicated by the dotted line 50. Alternatively, the programs and data 50 could be supplied to the user via some other secure route such as via encrypted e-mail.

When the hardware security module 10 needs to be verified by the user, the validation routine 52 issues a random challenge 58 from a pseudo-random generator 60. This acts as one input to the MAC or other software authentication function 20 within the module. A second input comes from the firmware 18, plus the other ROM data, as previously described. The output from the software authentication function 20 is returned as a response 62 to the validation routine 52.

As part of the validation routine 52 there is a further MAC or authentication routine 64 corresponding to the routine 20 within the module 10. This takes as one of its inputs the random challenge from the random number generator 60, and as its other input the expected contents 56 of the ROM (which will by definition, include the "authentic" version of the firmware that should be contained within the module 10). The output of the MAC 64 is compared with the response 62, and depending upon their equivalence or otherwise, a Pass/Fail signal or message 66 is generated.

The supplier of the CD 50 to the user will often be the same as the supplier or manufacturer of the security module 10. The manufacturer or supplier may not wish the user, or indeed anybody else, to have access to the plain text of the firmware, and to that end the "authentic" contents 56 on the CD ROM 50 may be supplied in encrypted form, the encryption key being known only to the supplier or trusted third party. A corresponding encryption routine 70, capable of encrypting the actual contents of the ROM 14 to the same key, is contained within the security module 10.

When the user wishes to verify the ROM contents, and thus the firmware, the encrypted authentic contents 56 are supplied to the MAC 64, and the actual contents are encrypted on the fly and supplied to the MAC 20 within the module. As before a Pass/Fail result tells the user whether the contents and thus plain text firmware 18 is valid, but this time without disclosing the contents of it to the user.

In another embodiment, the firmware 18 within the module 10 may itself be encrypted, to the same key as used for the encrypted version of the firmware 56 on the CD, in which case there is no need for the encryption routine 70.

It will be understood that because of the nature of the Message Authentication Code, in none of the above embodiments has any information about the details of the firmware 18 been released to the user, or indeed to anybody else.

## Claims

1. A firmware validation system comprising:
(a) a computer system (10) containing firmware (18) to be validated, the computer system including authentication means (20;22) arranged to return an authentication code in dependence upon:
i. a first input comprising a first external challenge, and
ii. a second input representative of the firmware (18);
(b) a trusted system (28) including check authentication means arranged to return a check authentication code in response to a second external challenge; and
(c) determining the validity of the firmware according to the check authentication code;
the system being **characterised in that** the firmware (18) is held in persistent memory in compressed form, along with an uncompression routine (34) and additional substantially incompressible data (36) to fill the memory.

2. A firmware validation system as claimed in claim 1 including:
means for issuing equivalent challenges to the computer system and the trusted system, and for determining that the firmware is valid if the resultant authentication code is equivalent to the check authentication code.

3. A firmware validation system as claimed in claim 1, including:
means for supplying a code representative of the authentication code as a challenge to the trusted system (28), and for determining that the firmware (18) is valid in dependence upon the resultant check authentication code.

4. A firmware validation system as claimed in any one of claims 1 to 3 in which the authentication means comprises a hardware authentication module (22).

5. A firmware validation system as claimed in claim any one of claims 1 to 3 in which the authentication means comprises a software function (20).

6. A firmware validation system as claimed in claim 5 in which the software function (20) and the firmware (18) are held in a common persistent memory (14).

7. A firmware validation system as claimed in any one of the preceding claims in which the computer system (10) is a secure system from which the firmware (18) cannot be extracted or copied.

8. A firmware validation system as claimed in any one of the preceding claims in which the computer system (10) is a computer security module for the storage of secure data, for example cryptographic keys.

9. A firmware validation system as claimed in any one of the preceding claims in which the second input to the authentication means comprises the firmware (18) itself.

10. A firmware validation system as claimed in any one of claims 1 to 9 in which the second input to the authentication means includes but is not limited to the firmware (18) itself.

11. A firmware validation system as claimed in any one of the preceding claims in which the additional data (36) comprises random data.

12. A firmware validation system as claimed in any one of the preceding claims in which the second input to the authentication means includes the compressed firmware (18), the uncompression routine (34) and the additional data (36).

13. A firmware validation system as claimed in any one of the preceding claims in which the firmware (18) is held in persistent memory in encrypted form, along with a decryption routine.

14. A firmware validation system as claimed in claim 13 in which the second input to the authentication means includes the encrypted firmware (18, the decryption routine and the additional data (36).

15. A firmware validation system as claimed in any one of the preceding claims in which a user (24) wishing to check the validity of the firmware (18) communicates with the computer system (10) or the trusted system (28), or both, across a local or wide area network, or across the internet.

16. A firmware validation system as claimed in claim 15 in which communication is via a secure channel.

17. A firmware validation system as claimed in claim 15 in which communication is sent via encrypted messages across an unsecure channel.

18. A firmware validation system as claimed in any one of the preceding claims when dependent upon claim 2 in which identical challenges are issued to the computer system (10) and to the trusted system (28).

19. A firmware validation system as claimed in any one of the preceding claims when dependent upon claim 2 in which the means for determining that the firmware is valid is held by a user of the system, and compares the authentication code received back from the computer system (10) and the check authentication code received back from the trusted system (28).

20. A firmware validation system as claimed in any one of the preceding claims when dependent upon claim 2 in which the means for determining that the firmware is valid is part of the trusted system (28).

21. A firmware validation system as claimed in any one of the preceding claims when dependent upon claim 3 in which the trusted system (28) sends a Yes/No response to a user of the system in dependence upon the result of its determination.

22. A firmware validation system as claimed in any one of the preceding claims in which the computer system (10) is an embedded system.

23. A method of validating firmware within a computer system (10), the method comprising:
(a) issuing a first external challenge to the computer system and a second external challenge to a trusted system (28);
(b) at the computer system, computing an authentication code in dependence upon:
i. a first input comprising the first challenge, and
ii. a second input representative of the firmware to be validated;
(c) at the trusted system, computing a check authentication code in dependence upon the second challenge; and
(d) determining the validity of the firmware according to the check authentication code;
the method being **characterised in that** the firmware (18) is held in persistent memory in compressed form, along with an uncompression routine (34) and additional substantially incompressible data (36) to fill the memory.

24. A method of validating firmware within a computer system as claimed in claim 23 in which equivalent challenges are issued to the computer system and to the trusted system, the validity of the firmware being determined by comparing the authentication code and the check authentication code.

25. A method of validating firmware within a computer system as claimed in claim 23 or claim 24 in which the check authentication code is computed by the trusted system in dependence upon:
i. a third input comprising the second challenge, and
ii. a fourth input representative of a correct version of the firmware.

26. A method of validity firmware as claimed in claim 23 in which the second challenge to the trusted system is representative of the authentication code.

27. A firmware validation system as claimed in claim 1 in which the trusted system comprises a validation algorithm (52) which has been supplied via a secure route from a trusted third party to a user of the firmware.

28. A firmware validation system as claimed in claim 27 in which the trusted system includes a secure copy (56) of an authentic version of the firmware (18) to be validated.

29. A firmware validation system as claimed in claim 28 in which the secure copy (56) is encrypted.

30. A firmware validation system as claimed in claim 29 in which the secure copy (56) is encrypted to a same encryption key as the firmware (18) to be validated.

31. A firmware validation system as claimed in claim 29 in which the secure copy (56) is encrypted to an encryption key, and in which the authentication means includes means for generating the second input by encrypting the firmware (18) to the said key.

32. A method of validating firmware within a computer system as claimed in claim 23 in which the trusted system comprises a computer algorithm which is operated by a user wishing to validate the firmware.

33. A method of validating firmware within a computer system as claimed in claim 32 including the step of supplying the computer algorithm to the user, from a trusted third party, via a secure route.

34. A method of validating firmware within a computer system as claimed in claim 33 including the step of supplying the user with an authentic copy of the firmware via a secure route.

35. A method of validating firmware within a computer system as claimed in claim 33 including the step of supplying the user with an encrypted copy of an authentic version of the firmware via a secure route.

36. A method of validating firmware within a computer system as claimed in claim 35 including calculating the second input by encrypting the firmware to be validated to the same key as that used to encrypt the authentic version of the firmware.

37. A method of validating firmware within a computer system as claimed in claim 36 including calculating the check authentication code in dependence upon:
i. A third input comprising the second challenge, and
ii. A fourth input comprising the said encrypted copy of the firmware.

## Revendications

1. Système de validation de microprogramme comprenant :
(a) un système informatique (10) contenant un microprogramme à valider, le système informatique comportant un moyen d'authentification (20 ; 22) agencé pour renvoyer un code d'authentification en fonction :
i. d'une première entrée comprenant une première interrogation externe, et
ii. d'une seconde entrée représentative du microprogramme (18) ;
(b) un système de confiance (28) incluant un moyen d'authentification de contrôle, agencé pour renvoyer un code d'authentification de contrôle en réponse à une seconde interrogation extérieure ; et
(c) la détermination de la validité du microprogramme conformément au code d'authentification de contrôle ;
le système étant **caractérisé en ce que** le microprogramme (18) est maintenu sous forme comprimée dans une mémoire persistante, avec un programme de décompression (34) et des données supplémentaires en grande partie incompressibles (36) comme remplissage de la mémoire.

2. Système de validation de microprogramme selon la revendication 1, incluant :
un moyen pour émettre des interrogations équivalentes vers le système informatique et vers le système de confiance, et pour déterminer que le microprogramme est valable si le code d'authentification résultant est équivalent au code d'authentification de contrôle.

3. Système de validation de microprogramme selon la revendication 1, incluant :
un moyen pour fournir un code représentatif du code d'authentification comme une interrogation du système de confiance (28), et pour déterminer que le microprogramme est valable en fonction du code d'authentification de contrôle résultant.

4. Système de validation de microprogramme selon l'une quelconque des revendications 1 à 3, dans lequel le moyen d'authentification comprend un module électronique d'authentification.

5. Système de validation de microprogramme selon l'une quelconque des revendications 1 à 3, dans lequel le moyen d'authentification contient une fonction logicielle (20).

6. Système de validation de microprogramme selon la revendication 5, dans lequel la fonction logicielle (20) et le microprogramme (18) sont maintenus dans une mémoire persistante commune. (14).

7. Système de validation de microprogramme selon l'une quelconque des revendications précédentes, dans lequel le système informatique (10) est un système sécurisé à partir duquel le microprogramme (18) ne peut être ni extrait ni copié.

8. Système de validation de microprogramme selon l'une quelconque des revendications précédentes, dans lequel le système informatique (10) est un module informatique de sécurité pour le stockage de données sécurisées, comme par exemple des clefs de chiffrement.

9. Système de validation de microprogramme selon l'une quelconque des revendications précédentes, dans lequel la seconde entrée dans le moyen d'authentification comprend le microprogramme lui-même (18).

10. Système de validation de microprogramme selon l'une quelconque des revendications 1 à 9, dans lequel la seconde entrée dans le moyen d'authentification contient, mais n'y est pas limitée, le microprogramme (18) à lui seul.

11. Système de validation de microprogramme selon l'une quelconque des revendications précédentes, dans lequel les données supplémentaires (36) comprennent des données aléatoires.

12. Système de validation de microprogramme selon l'une quelconque des revendications précédentes, dans lequel la seconde entrée dans le moyen d'authentification comporte le microprogramme comprimé (18), le programme de décompression (34) ainsi que les données supplémentaires (36).

13. Système de validation de microprogramme selon l'une quelconque des revendications précédentes , dans lequel le microprogramme (18) est maintenu dans une mémoire persistante sous forme de copie codée, en même temps qu'un programme de déchiffrement.

14. Système de validation de microprogramme selon la revendication 13, dans lequel la seconde entrée dans le système d'authentification contient le microprogramme codé (18), le programme de déchiffrement et les données supplémentaires (36).

15. Système de validation de microprogramme selon l'une quelconque des revendications précédentes, dans lequel un utilisateur (24) souhaitant contrôler la validité du microprogramme (18) communique avec le système informatique (10) ou avec le système de confiance (28), ou avec les deux, par le biais d'un réseau local ou régional, ou de l'internet.

16. Système de validation de microprogramme selon la revendication 15, dans lequel la communication se fait par un canal sécurisé.

17. Système de validation de microprogramme selon la revendication 15, dans lequel la communication est envoyée par le biais de messages codés par un canal sécurisé.

18. Système de validation de microprogramme selon l'une quelconque des revendications précédentes lorsqu'elle dépend de la revendication 2, dans lequel des interrogations identiques sont émises vers le système informatique (10) et vers le système de confiance (28).

19. Système de validation de microprogramme selon l'une quelconque des précédentes revendications lorsqu'elle dépend de la revendication 2, dans lequel le moyen de détermination de la validité du microprogramme est tenu par un utilisateur du système, et compare le code d'authentification renvoyé par le système informatique (10) et le code d'authentification de contrôle renvoyé par le système de confiance (28).

20. Système de validation de microprogramme selon l'une quelconque des revendications précédentes lorsqu'elle dépend de la revendication 2, dans lequel le moyen de détermination de la validité du microprogramme fait partie du système de confiance (28).

21. Système de validation de microprogramme selon l'une quelconque des revendications précédentes lorsqu'elle dépend de la revendication 3, dans lequel le système de confiance (28) envoie une réponse Oui/Non vers l'utilisateur du système en fonction du résultat de sa détermination.

22. Système de validation de microprogramme selon l'une quelconque des revendications précédentes, dans lequel le système informatique (10) est un système encastré.

23. Procédé de validation de microprogramme dans un système informatique (10) comprenant :
(a) l'émission d'une première interrogation externe vers le système informatique et une seconde interrogation externe vers un système de confiance (28) ;
(b) dans le système informatique, le calcul d'un code d'authentification en fonction :
i. d'une première entrée comprenant la première sollicitation, et
ii. d'une seconde entrée représentative du microprogramme à valider ;
(c) dans le système de confiance, le calcul d'un code d'authentification de contrôle en fonction de la seconde interrogation; et
(d) la détermination de la validité du microprogramme selon le code d'authentification de contrôle ;
le procédé étant **caractérisé en ce que** le microprogramme (18) est maintenu dans une mémoire persistante sous forme comprimée, avec un programme de décompression (34) et des données supplémentaires en grande partie incompressibles (36) pour le remplissage de la mémoire.

24. Procédé de validation de microprogramme dans un système informatique selon la revendication 23, dans lequel des interrogations équivalentes sont émises vers le système informatique et vers le système de confiance, la validité du microprogramme étant déterminée par la comparaison du code d'authentification et du code d'authentification de contrôle.

25. Système de validation de microprogramme dans un système informatique selon la revendication 23 ou la revendication 24, dans lequel le code d'authentification de contrôle est calculé par le système de confiance en fonction :
i. d'une troisième entrée comprenant la seconde interrogation, et
ii. d'une quatrième entrée représentative de la version correcte du microprogramme.

26. Procédé de validation de microprogramme selon la revendication 23, dans lequel la seconde interrogation émise vers le système de confiance est représentative du code d'authentification.

27. Système de validation de microprogramme selon la revendication 1, dans lequel le système de confiance comprend un algorithme de validation (52) qui a été fourni par une voie sécurisée à partir d'une tierce partie de confiance à l'utilisateur du microprogramme.

28. Système de validation de microprogramme selon la revendication 27, dans lequel le système de confiance comporte une copie sécurisée (56) d'une version authentique du microprogramme (18) à valider.

29. Système de validation selon la revendication 28, dans lequel la copie sécurisée (56) est codée.

30. Système de validation selon la revendication 29, dans lequel la copie sécurisée (56) est codée selon une même clef de chiffrement que le microprogramme (18) à valider.

31. Système de validation de microprogramme selon la revendication 29, dans lequel la copie sécurisée (56) est codé selon une clef de chiffrement, et dans lequel le moyen d'authentification inclut un moyen pour générer la seconde entrée en codant le microprogramme (18) avec ladite clef.

32. Procédé de validation de microprogramme dans un système informatique selon la revendication 23, dans lequel le système de confiance comprend un algorithme informatique qui est employé par un utilisateur souhaitant valider le microprogramme.

33. Procédé de validation de microprogramme dans un système informatique selon la revendication 32 comportant l'étape de fourniture de l'algorithme informatique à l'utilisateur, en provenance d'une tierce partie de confiance, par une voie sécurisée.

34. Procédé de validation de microprogramme dans un système informatique selon la revendication 33, comportant l'étape de fourniture à l'utilisateur d'une copie codée d'une copie authentique du microprogramme par une voie sécurisée.

35. Procédé de validation de microprogramme d'un système informatique selon la revendication 33, comportant l'étape de fourniture à l'utilisateur d'une copie codée d'une version authentique du microprogramme par une voie sécurisée.

36. Procédé de validation de microprogramme dans un système informatique selon la revendication 35, comportant le calcul de la seconde entrée en codant le microprogramme à valider avec la même clef que celle employée pour coder la version authentique du microprogramme.

37. Procédé de validation de microprogramme dans un système informatique selon la revendication 36, comportant le calcul du code d'authentification de contrôle en fonction :
i. d'une troisième entrée comprenant la seconde interrogation, et
ii. d'une quatrième entrée comprenant ladite copie codée du microprogramme.

## Patentansprüche

1. Gültigkeitsprüfungssystem für Firmware, welches aufweist:
(a) ein Computersystem (10) welches eine auf Gültigkeit zu prüfende Firmware (18) aufweist, wobei das Computersystem Authentifizierungsmittel (20; 22) aufweist, die ausgelegt sind, einen Authentifizierungscode zurückzugeben in Abhängigkeit von:
i. einer ersten Eingabe, die eine erste externe Aufforderung aufweist, und
ii. einer zweiten Eingabe, die für die Firmware (18) charakteristisch ist;
(b) ein gesichertes System (28) welches ein Prüf-Authentifizierungsmittel beinhaltet, das ausgelegt ist, in Reaktion auf eine zweite externe Aufforderung einen Prüf-Authentifizierungscode zurückzugeben; und
(c) Ermitteln der Gültigkeit der Firmware entsprechend dem Prüf-Authentifizierungscode;
wobei das System **dadurch gekennzeichnet ist, dass** die Firmware (18) in komprimierter Form in einem nichtflüchtigen Speicher festgehalten ist, zusammen mit einem Dekomprimierprogramm (34) und zusätzlicher, im Wesentlichen unkomprimierbarer Daten (36) zum Auffüllen des Speichers.

2. Gültigkeitsprüfungssystem für Firmware nach Anspruch 1, welches beinhaltet:
Mittel, um äquivalente Aufforderungen an das Computersystem und an das gesicherte System auszugeben, und um zu bestimmen, dass die Firmware gültig ist, wenn der sich ergebende Authentifizierungscode äquivalent zu dem Prüf-Authentifizierungscode ist.

3. Gültigkeitsprüfungssystem für Firmware nach Anspruch 1, welches beinhaltet:
Mittel um dem gesicherten System (28) einen den Authentifizierungscode repräsentierenden Code als Aufforderung zuzuführen, und in Abhängigkeit von dem sich ergebenden Prüf-Authentifizierungscode zu bestimmen, dass die Firmware (18) gültig ist.

4. Gültigkeitsprüfungssystem für Firmware nach einem der Ansprüche 1 bis 3, wobei die Authentifizierungsmittel ein Hardware- Authentifizierungsmodul (22) aufweisen.

5. Gültigkeitsprüfungssystem für Firmware nach einem der Ansprüche 1 bis 3, wobei die Authentifizierungsmittel eine Software-Funktion (20) aufweisen.

6. Gültigkeitsprüfungssystem für Firmware nach Anspruch 5, wobei die Software-Funktion (20) und die Firmware (18) in einem gemeinsamen, nichtflüchtigen Speicher (14) festgehalten sind.

7. Gültigkeitsprüfungssystem für Firmware nach einem der vorhergehenden Ansprüche, wobei das Computersystem (10) ein sicheres System ist, von welchem die Firmware (18) weder entnommen, noch kopiert werden kann.

8. Gültigkeitsprüfungssystem für Firmware nach einem der vorhergehenden Ansprüche, wobei das Computersystem (10) ein Computer-Sicherheitsmodul zum Speichern von Sicherheitsdaten, wie zum Beispiel kryptographischer Schlüssel ist.

9. Gültigkeitsprüfungssystem für Firmware nach einem der vorhergehenden Ansprüche, wobei die zweite Eingabe an die Authentifizierungsmittel die Firmware (18) selbst aufweist.

10. Gültigkeitsprüfungssystem für Firmware nach einem der Ansprüche 1 bis 9, bei welchem die zweite Eingabe an die Authentifizierungsmittel die Firmware (18) selbst beinhaltet, aber nicht auf diese beschränkt ist.

11. Gültigkeitsprüfungssystem für Firmware nach einem der vorhergehenden Ansprüche, wobei die zusätzlichen Daten (36) Zufallsdaten aufweisen.

12. Gültigkeitsprüfungssystem für Firmware nach einem der vorhergehenden Ansprüche, wobei die zweite Eingabe an die Authentifizierungsmittel die komprimierte Firmware (18), das Dekomprimierprogramm (34) und die zusätzlichen Daten (36) beinhaltet.

13. Gültigkeitsprüfungssystem für Firmware nach einem der vorhergehenden Ansprüche, wobei die Firmware (18) im nichtflüchtigen Speicher in verschlüsselter Form, zusammen mit einem Entschlüsselungsprogramm festgehalten ist.

14. Gültigkeitsprüfungssystem für Firmware nach Anspruch 13, wobei die zweite Eingabe an die Authentifizierungsmittel die verschlüsselte Firmware (18), das Entschlüsselungsprogramm und die zusätzlichen Daten (36) beinhaltet.

15. Gültigkeitsprüfungssystem für Firmware nach einem der vorhergehenden Ansprüche, wobei ein Benutzer (24), der die Gültigkeit der Firmware (18) zu prüfen wünscht, entweder mit dem Computersystem (10) oder mit dem gesicherten System (28) oder mit beiden über ein lokales- oder ein großräumiges Netzwerk oder über das Internet kommuniziert.

16. Gültigkeitsprüfungssystem für Firmware nach Anspruch 15, wobei die Kommunikation über einen sicheren Kanal abläuft.

17. Gültigkeitsprüfungssystem für Firmware nach Anspruch 15, wobei die Kommunikation mittels verschlüsselter Nachrichten über einen unsicheren Kanal übermittelt wird.

18. Gültigkeitsprüfungssystem für Firmware nach einem der vorhergehenden Ansprüche, sofern dieser von Anspruch 2 abhängig ist, wobei an das Computersystem (10) und an das gesicherte System (28) identische Aufforderungen ausgegeben werden.

19. Gültigkeitsprüfungssystem für Firmware nach einem der vorhergehenden Ansprüche, sofern dieser von Anspruch 2 abhängig ist, wobei das Mittel zum Bestimmen, ob die Firmware gültig ist, von einem Benutzer des Systems bereitgehalten wird, und das Mittel den von dem Computersystem (10) zurückerhaltenen Authentifizierungscode mit dem von dem gesicherten System (28) zurückerhaltenen Prüf-Authentifizierungscode vergleicht.

20. Gültigkeitsprüfungssystem für Firmware nach einem der vorhergehenden Ansprüche, sofern dieser von Anspruch 2 abhängig ist, wobei das Mittel zum Ermitteln, dass die Firmware gültig ist, ein Teil des gesicherten Systems (28) ist.

21. Gültigkeitsprüfungssystem für Firmware nach einem der vorhergehenden Ansprüche, sofern dieser von Anspruch 3 abhängig ist, wobei das gesicherte System (28) in Abhängigkeit von dem Ergebnis von dessen Ermittlung eine Ja/Nein-Antwort an einen Benutzer des Systems sendet.

22. Gültigkeitsprüfungssystem für Firmware nach einem der vorhergehenden Ansprüche, wobei das Computersystem (10) ein eingebettetes System ist.

23. Verfahren zum Überprüfen der Gültigkeit von Firmware in einem Computersystem (10), wobei das Verfahren aufweist:
(a) Ausgeben einer ersten externen Aufforderung an das Computersystem und einer zweiten externen Aufforderung an ein gesichertes System (28);
(b) bei dem Computersystem Berechnen eines Authentifizierungscodes in Abhängigkeit von:
i. einer ersten Eingabe, welche die erste Aufforderung aufweist, und
ii. einer zweiten Eingabe, welche für die Firmware, die auf Gültigkeit geprüft werden soll, repräsentativ ist;
(c) bei dem gesicherten System Berechnen eines Prüf-Authentifizierungscodes in Abhängigkeit von der zweiten Aufforderung; und
(d) Ermitteln der Gültigkeit der Firmware, entsprechend dem Prüf-Authentifizierungscode;
wobei das Verfahren **dadurch gekennzeichnet ist, dass** die Firmware (18) in komprimierter Form in einem nichtflüchtigen Speicher festgehalten ist, zusammen mit einem Dekomprimierprogramm (34) und zusätzlicher, im Wesentlichen unkomprimierbarer Daten (36) zum Auffüllen des Speichers.

24. Verfahren zum Überprüfen der Gültigkeit von Firmware in einem Computersystem nach Anspruch 23, wobei äquivalente Aufforderungen an das Computersystem und an das gesicherte System ausgegeben werden, wobei die Gültigkeit der Firmware durch Vergleichen des Authentifizierungscodes und des Prüf-Authentifizierungscodes ermittelt wird.

25. Verfahren zum Überprüfen der Gültigkeit von Firmware nach Anspruch 23 oder Anspruch 24, wobei der Prüf-Authentifizierungscode von dem gesicherten System berechnet wird in Abhängigkeit von:
i. einer dritten Eingabe, die die zweite Aufforderung aufweist, und
ii. einer vierten Eingabe, die für eine korrekte Version der Firmware repäsentativ ist.

26. Verfahren zum Überprüfen der Gültigkeit von Firmware in einem Computersystem nach Anspruch 23, wobei die zweite Aufforderung an das gesicherte System repräsentativ für den Authentifizierungscode ist.

27. Gültigkeitsprüfungssystem für Firmware nach Anspruch 1, wobei das gesicherte System einen Algorithmus zur Gültigkeitsprüfung (52) aufweist, der von einer zuverlässigen dritten Seite über eine sichere Verbindung an einen Benutzer der Firmware beigestellt wurde.

28. Gültigkeitsprüfungssystem für Firmware nach Anspruch 27, wobei das gesicherte System eine sichere Kopie (56) einer authentischen Version der Firmware (18), die auf Gültigkeit geprüft werden soll, beinhaltet.

29. Gültigkeitsprüfungssystem für Firmware nach Anspruch 28, wobei die sichere Kopie (56) verschlüsselt ist.

30. Gültigkeitsprüfungssystem für Firmware nach Anspruch 29, wobei die sichere Kopie (56) auf einen gleichen Verschlüsselungscode verschlüsselt ist, wie die Firmware (18), die auf Gültigkeit geprüft werden soll.

31. Gültigkeitsprüfungssystem für Firmware nach Anspruch 29, wobei die sichere Kopie (56) auf einen Verschlüsselungscode verschlüsselt ist, und wobei die Authentifizierungsmittel Mittel für das Erzeugen der zweiten Eingabe beinhalten, indem die Firmware (18) auf diesen Schlüssel verschlüsselt wird.

32. Verfahren zum Überprüfen der Gültigkeit von Firmware in einem Computersystem nach Anspruch 23, wobei das gesicherte System einen Computeralgorithmus aufweist, der von einem Benutzer bedient wird, der die Gültigkeit der Firmware zu prüfen wünscht.

33. Verfahren zum Überprüfen der Gültigkeit von Firmware in einem Computersystem nach Anspruch 32, welches den Schritt beinhaltet, den Computeralgorithmus dem Benutzer von einer zuverlässigen dritten Seite über eine sichere Verbindung beizustellen.

34. Verfahren zum Überprüfen der Gültigkeit von Firmware in einem Computersystem nach Anspruch 33, welches den Schritt beinhaltet, dem Benutzer eine authentische Kopie der Firmware über eine sichere Verbindung beizustellen.

35. Verfahren zum Überprüfen der Gültigkeit von Firmware in einem Computersystem nach Anspruch 33, welches den Schritt beinhaltet, dem Benutzer eine verschlüsselte Kopie einer authentischen Version der Firmware über eine sichere Verbindung beizustellen.

36. Verfahren zum Überprüfen der Gültigkeit von Firmware in einem Computersystem nach Anspruch 35, welches das Berechnen der zweiten Eingabe beinhaltet, indem die Firmware, die auf Gültigkeit geprüft werden soll, auf den gleichen Schlüssel verschlüsselt wird, wie der, der benutzt wird, um die authentische Version der Firmware zu verschlüsseln.

37. Verfahren zum Überprüfen der Gültigkeit von Firmware in einem Computersystem nach Anspruch 36, welches das Berechnen des Prüf-Authentifizierungscodes aufweist in Abhängigkeit von:
i. einer dritten Eingabe, die die zweite Aufforderung beinhaltet, und
ii. einer vierten Eingabe, welche die verschlüsselte Kopie der Firmware aufweist.
